# EUROPEAN PATENT SPECIFICATION

(11) **EP 4 439 206 B1**
(45) Date of publication and mention of the grant of the patent: **17.09.2025**
(21) Application number: 23193633.7
(22) Date of filing: 28.08.2023
(51) Int. Cl.: G05B 19/418, G06F 11/00

(54) **INFORMATION PROCESSING SYSTEM, PROGRAM, AND INFORMATION PROCESSING METHOD**
INFORMATIONSVERARBEITUNGSSYSTEM, PROGRAMM UND INFORMATIONSVERARBEITUNGSVERFAHREN
SYSTÈME, PROGRAMME ET PROCÉDÉ DE TRAITEMENT D'INFORMATIONS

(30) Priority: 29.03.2023 JP 2023053933
(43) Date of publication of application: 02.10.2024
(73) Proprietor: FUJIFILM Business Innovation Corp., Minato-ku Tokyo (JP)
(72) Inventor: YAMADA, Takuya, Yokohama-shi, Kanagawa (JP)
(74) Representative: Kurig, Thomas

(56) References cited:
- DK-A1- 201 800 123
- JP-A- 2013 140 563
- US-A1- 2013 114 100
- US-A1- 2020 026 257

## Description

### BACKGROUND OF THE INVENTION

### (i) Field of the Invention

The present invention relates to an information processing system, a program, and an information processing method.

### (ii) Description of Related Art

JP2020-47011A describes an information processing apparatus including a first detection unit that detects that an error occurs, a second detection unit that detects that the error is resolved, and a transmission unit that transmits information related to error occurrence time that is time from the occurrence of the error to the resolving of the error to a management apparatus, in which the information related to the time from the occurrence of the error to the resolving of the error can be transmitted to the management apparatus.

JP2013-140563A describes an information processing apparatus including a reception unit that receives state information from an image forming apparatus, a transmission unit that transmits AR information that includes AR guidance related to a first operation of the image forming apparatus and in which the AR guidance is superimposed on an image captured by a client apparatus to the client apparatus, an acquisition unit that acquires information that is generated from the image forming apparatus and includes display of an error that occurs in the image forming apparatus, in which the information is generated from performance of the first operation by the image forming apparatus, a determination unit that determines the error based on the information acquired by the acquisition unit, and a transfer unit that transfers the AR information including additional AR guidance based on the determined error.

US2020/026257A1 is another prior art document.

### SUMMARY OF THE INVENTION

In recent years, augmented reality (AR) technology that displays information that is created by data processing, to be superimposed on the real world has been put into practical use. For example, there is known technology of displaying an AR manual including an annotation or an object in which a work procedure is described, to be superimposed on an image obtained by imaging a device of a target for work (may be referred to as a "target device").

Here, in the AR manual, there is a deficiency, such as an omission or a mistake of the work procedure, and an insufficient description of a precaution, and the work may fail due to the deficiency. However, in a case in which only a notification that the work has failed is given from the target device, a user who performs an operation by using the AR manual cannot grasp the deficiency of the AR manual, and it is difficult to correct the AR manual.

The present invention enables the user to easily grasp the deficiency of the AR manual as compared to a case in which only the notification that the work has failed is given from the device of the target for the work.

According to a first aspect of the present disclosure, there is provided an information processing system including: one or a plurality of processors configured to: acquire, for work performed by a user according to an AR manual indicating a work procedure for a target device, a record of an operation received by the target device in a period in which the work is performed; acquire image data in which a state of an operation performed by the user on the target device is imaged in the period in which the work is performed; and display correspondence information related to a correspondence between the operation received by the target device in the record and the operation performed by the user on the target device in the image data on a display unit.

According to a second aspect of the present disclosure, there is provided the information processing system according to the first aspect of the present disclosure, in which the one or plurality of processors may be configured to: display, as the correspondence information, information indicating a non-correspondence portion in which the operation received by the target device in the record and the operation performed by the user on the target device in the image data do not correspond to each other on the display unit.

According to a third aspect of the present disclosure, there is provided the information processing system according to the second aspect of the present disclosure, in which the one or plurality of processors may be configured to: in a case in which predetermined input by the user is performed on an input device in the period in which the work is performed, specify an operation performed by the user on the target device in association with the predetermined input as the non-correspondence portion and display the correspondence information on the display unit.

According to a fourth aspect of the present disclosure, there is provided the information processing system according to the third aspect of the present disclosure, in which the one or plurality of processors may be configured to: display a suggestion to add the operation performed by the user on the target device in association with the predetermined input to the AR manual on the display unit.

According to a fifth aspect of the present disclosure, there is provided the information processing system according to any one of the second to fourth aspects of the present disclosure, in which the one or plurality of processors may be configured to: in a case in which the non-correspondence portion is present between a first operation included in the work procedure indicated by the AR manual and a second operation following the first operation, display a suggestion to perform correction of the work procedure between the first operation and the second operation in the AR manual on the display unit.

According to a sixth aspect of the present disclosure, there is provided the information processing system according to any one of the second to fourth aspects of the present disclosure, in which the one or plurality of processors are configured to: in a case in which the non-correspondence portion is present between a first operation included in the work procedure indicated by the AR manual and a second operation following the first operation, display image data corresponding to a period from the first operation to the second operation in the image data on the display unit.

According to a seventh aspect of the present disclosure, there is provided a program causing a computer to realize: a function of acquiring, for work performed by a user according to an AR manual indicating a work procedure for a target device, a record of an operation received by the target device in a period in which the work is performed; a function of acquiring image data in which a state of an operation performed by the user on the target device is imaged in the period in which the work is performed; and a function of displaying correspondence information related to a correspondence between the operation received by the target device in the record and the operation performed by the user on the target device in the image data on a display unit.

According to an eighth aspect of the present disclosure, there is provided an information processing method including: acquiring, for work performed by a user according to an AR manual indicating a work procedure for a target device, a record of an operation received by the target device in a period in which the work is performed; acquiring image data in which a state of an operation performed by the user on the target device is imaged in the period in which the work is performed; and displaying correspondence information related to a correspondence between the operation received by the target device in the record and the operation performed by the user on the target device in the image data on a display unit.

According to the first aspect of the present disclosure, it is easy for the user to grasp a deficiency of the AR manual as compared to a case in which only a notification that the work has failed is given from a device of a target for the work.

According to the second aspect of the present disclosure, it is easy for the user to grasp the deficiency of the AR manual from a difference between the operation received by the target device and the operation performed by the user on the target device.

According to the third aspect of the present disclosure, the accuracy of specifying the non-correspondence portion is improved.

According to the fourth aspect of the present disclosure, the user can grasp the correction to be performed on the AR manual.

According to the fifth aspect of the present disclosure, it is easy for the user to grasp in which process of the work procedure in the AR manual the correction is required.

According to the sixth aspect of the present disclosure, the user can check the operation actually performed on the target device by the image data and can utilize the operation for the correction of the AR manual.

According to the seventh aspect of the present disclosure, it is easy for the user to grasp the deficiency of the AR manual as compared to a case in which only the notification that the work has failed is given from the device of the target for the work.

According to the eighth aspect of the present disclosure, it is easy for the user to grasp the deficiency of the AR manual as compared to a case in which only the notification that the work has failed is given from the device of the target for the work.

### BRIEF DESCRIPTION OF THE DRAWINGS

Exemplary embodiment(s) of the present invention will be described in detail based on the following figures, wherein:
Fig. 1 is a diagram showing a configuration example of an information processing system according to the present exemplary embodiment;
Fig. 2 is a diagram showing a display example in a display unit of an AR device according to the present exemplary embodiment;
Fig. 3 is a diagram showing an example of hardware configurations of a user terminal and a management server according to the present exemplary embodiment;
Fig. 4 is a diagram showing a functional configuration example of the management server according to the present exemplary embodiment;
Fig. 5 is a diagram for describing a correspondence between operation logs and image data according to the present exemplary embodiment; and
Fig. 6 is a diagram for describing an example of display of correspondence information.

### DETAILED DESCRIPTION OF THE INVENTION

Hereinafter, an exemplary embodiment of the present invention will be described in detail with reference to the accompanying drawings.

### <Configuration of Information Processing System>

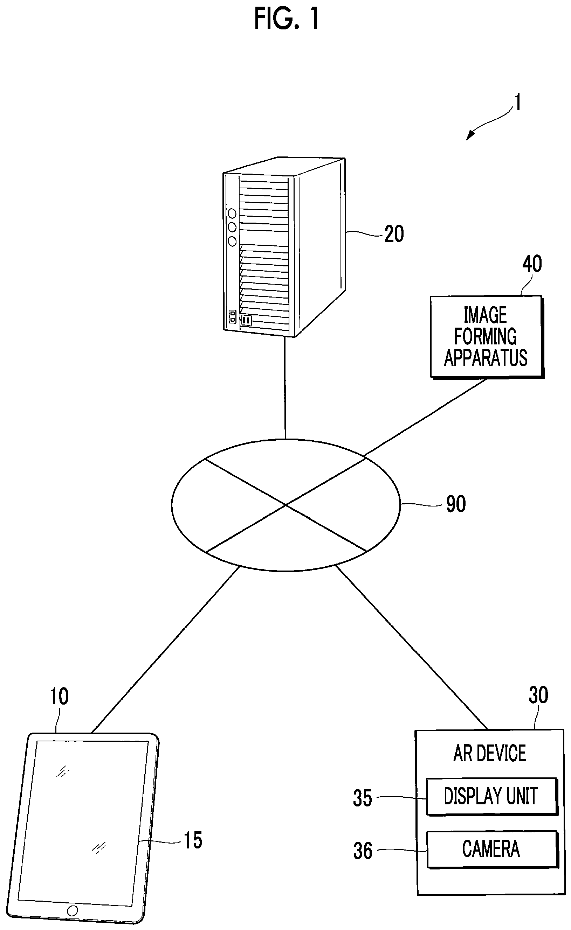

Fig. 1 is a diagram showing a configuration example of an information processing system according to the present exemplary embodiment.

An information processing system 1 includes a user terminal 10 used in a case in which a user sets an AR manual, a management server 20 that manages the AR manual, an AR device 30 for using the AR manual, and an image forming apparatus 40 that is a target for work based on the AR manual. The devices are connected to each other via a network 90.

The user terminal 10 is an information processing apparatus used in a case in which the user sets the AR manual. The user terminal 10 includes a display unit 15 including a liquid crystal display panel, which displays an image, text information, or the like, an organic electro luminescence (EL) display panel, or the like.

The user terminal 10 is realized by, for example, various computers, such as a personal computer, a tablet type information terminal, and a smartphone.

The management server 20 is a server that manages the AR manual set by the user terminal 10, and provides the AR manual to the AR device 30.

The management server 20 is realized by, for example, the computer. The management server 20 may be configured by a single computer, or may be realized by distribution processing by a plurality of computers.

The AR device 30 is an apparatus that displays the AR manual provided by the management server 20, and allows the user to visually recognize the AR manual. The AR device 30 includes a display unit 35 including a liquid crystal display panel, which displays an image, text information, or the like, an organic electro luminescence (EL) display panel, or the like, and allows the user to visually recognize the AR manual by displaying the AR manual on the display unit 35.

In addition, the AR device 30 according to the present exemplary embodiment includes a camera 36 that creates image data in which a state in which the user performs an operation on the image forming apparatus 40 is imaged. This image data is displayed to be superimposed on the AR manual on the display unit 35, is transmitted to the management server 20, and is used for creating correspondence information to be described below.

The AR device 30 is realized by, for example, various computers, such as a tablet type information terminal and a smartphone, in addition to a head-mounted display (HMD). It should be noted that, in the present exemplary embodiment, a case in which the HMD is used as the AR device 30 will be described as an example.

The image forming apparatus 40 is an apparatus that forms an image corresponding to a document on a recording material, such as paper, and prints the document. The image forming apparatus 40 is kept by, for example, performing various types of work, such as repair or maintenance, based on a predetermined work procedure by the user.

Here, the image forming apparatus 40 can record various operations received by the image forming apparatus 40, and can transmit the record to the management server 20. More specifically, in a case in which the work is performed by the user, the image forming apparatus 40 transmits the record of the operation received in a period in which the work is performed (may be referred to as "operation logs") to the management server 20. The operation logs may include, for example, date and time at which the operation is performed, user identification information for identifying the user who has performed the operation, or the like, in addition to the content of the operation. In addition, for an error that occurs in the image forming apparatus 40, the image forming apparatus 40 transmits, as an error report, information on the date and time at which the error occurs, error analysis information used for an analysis of the error, or the like in addition to an error code for uniquely specifying a content of the error.

The image forming apparatus 40 is an example of a target device, and another device may be used as the target device.

The network 90 is an information communication network responsible for communication between the user terminal 10 and the management server 20. A type of the network 90 is not particularly limited as long as data can be transmitted and received, and may be, for example, the Internet, a local area network (LAN), a wide area network (WAN), or the like. A communication line used for data communication may be wired or wireless. In addition, a configuration may be adopted in which the apparatuses are connected to each other via a plurality of networks or communication lines.

### <AR Manual>

Here, the "AR manual" is a manual indicating a work procedure for the target device, and refers to a manual to which AR technology is applied. More specifically, the AR manual is displayed to be superimposed on the image data captured by the camera 36 on the display unit 35 of the AR device 30, and presents an operation to be performed on the image forming apparatus 40 as the work procedure to the user.

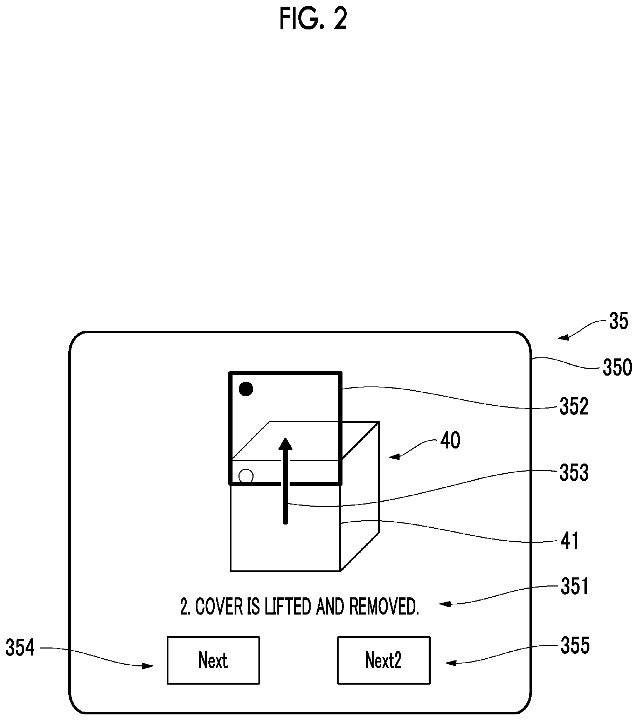

Fig. 2 is a diagram showing a display example in the display unit 35 of the AR device 30 according to the present exemplary embodiment. It should be noted that Fig. 2 is the display example in a process of performing an operation of removing a cover 41 of the image forming apparatus 40 in the predetermined work procedure for the work on the image forming apparatus 40.

As shown in Fig. 2, on the display unit 35, a text 351 that presents an operation corresponding to the current process, an operation model 352 that is a 3D model showing an operation mode, and auxiliary information 353 that assists in grasping the operation by the user are displayed to be superimposed on image data 350 captured by the camera 36 (see Fig. 1). It should be noted that the text 351, the operation model 352, and the auxiliary information 353 are examples of a display mode of the AR manual, and the present invention is not limited to this.

The text 351 is the text that presents the operation corresponding to the current process in the predetermined work procedure for the work on the image forming apparatus 40. In the example of Fig. 2, the text 351 "The cover is lifted and removed" is displayed as the text that presents the operation of removing the cover 41.

The operation model 352 is the 3D model showing the operation mode, and shows, for example, a state of a component, a button, or the like that is an operation target after the operation. In the example of Fig. 2, the operation model 352 corresponding to the cover 41 in a removed state is displayed to be superimposed on the image data of the image forming apparatus 40 in which the cover 41 is not removed.

The auxiliary information 353 is information, such as an image or a text that is added to assist in grasping the operation by the user, and for example, indicates a direction of moving the component, an amount of moving the component, or the like in a case in which an operation of moving the component is performed. In the example of Fig. 2, an arrow corresponding to a direction in which the cover 41 is moved in a case in which the cover 41 is removed is displayed as the auxiliary information 353.

In addition, on the display unit 35 of the AR device 30 according to the present exemplary embodiment, operation buttons 354 and 355 that can receive the operation from the user are displayed together with the AR manual.

By selecting the operation button 354 ("Next" in Fig. 2), the user can explicitly indicate that the operation currently presented in the AR manual may be completed and the process may proceed to the presentation of the next operation. In addition, by selecting the operation button 355 ("Next2" in Fig. 2), the user can explicitly indicate that the process may proceed to the presentation of the next operation while indicating that an operation different from the operation currently presented in the AR manual is performed.

It should be noted that the selection of the operation button 355 is an example of predetermined input, and the operation performed after the selection of the operation button 355 is an example of an operation performed by the user in association with the predetermined input. Examples of the predetermined input include input of a predetermined gesture within an angle of view of the camera 36 (see Fig. 1), and input of a predetermined operation using various input devices.

### <Hardware Configuration of Computer>

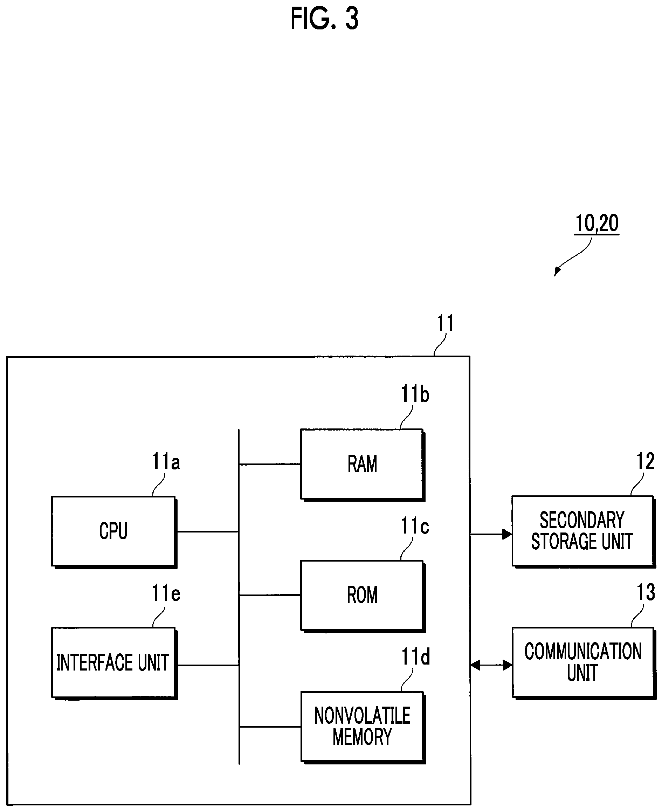

Fig. 3 is a diagram showing an example of hardware configurations of the user terminal 10 and the management server 20 according to the present exemplary embodiment.

Each of the user terminal 10 and the management server 20 includes a control unit 11 that controls the operation of the entire apparatus, a secondary storage unit 12 in which various types of information are recorded, and a communication unit 13 that transmits and receives the information via the network 90 (see Fig. 1). It should be noted that the control unit 11, the secondary storage unit 12, and the communication unit 13 are connected to each other through a bus or a signal line.

The control unit 11 includes a CPU 11a that controls the entire apparatus as an example of a processor, a RAM 11b that is used as a work memory of the CPU 11a, and a ROM 11c that saves a program or the like executed by the CPU 11a. In addition, the control unit 11 includes a rewritable nonvolatile memory 11d that can retain data even in a case in which the power supply is interrupted, and an interface unit 11e that controls each unit, such as the communication unit 13 connected to the control unit 11.

The nonvolatile memory 11d is configured by, for example, an SRAM, a flash memory, or the like backed up by a battery. In addition, in a case in which the control unit 11 reads the program stored in the secondary storage unit 12, each processing is executed by each apparatus according to the present exemplary embodiment.

The secondary storage unit 12 is configured by, for example, a hard disk device (HDD), a semiconductor memory, or the like. The secondary storage unit 12 is different depending on a product form of each apparatus. The secondary storage unit 12 stores the program executed by the control unit 11 or various types of information.

In addition, the user terminal 10 includes an input device (not shown), such as a keyboard and a mouse, and the display unit 15 (see Fig. 1) configured by a liquid crystal display or the like. In a case in which the input device of the user terminal 10 is a touch panel, the input device may be provided integrally with the display unit 15.

### <Function of Management Server>

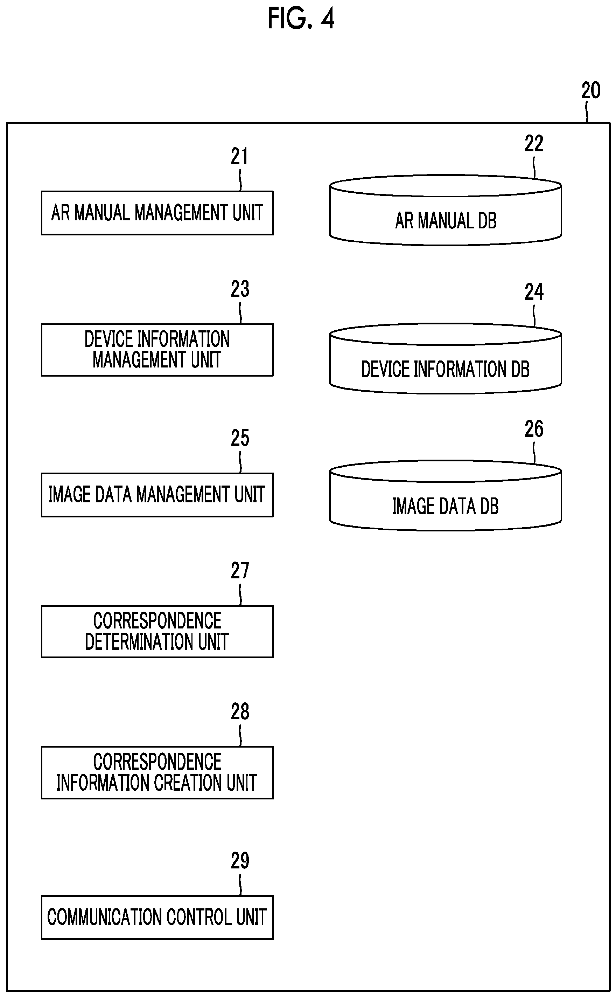

Next, a functional configuration of the management server 20 will be described. Fig. 4 is a diagram showing the functional configuration example of the management server 20 according to the present exemplary embodiment.

As shown in Fig. 4, the management server 20 includes an AR manual management unit 21, an AR manual database (DB) 22, a device information management unit 23, a device information DB 24, an image data management unit 25, an image data DB 26, a correspondence determination unit 27, a correspondence information creation unit 28, and a communication control unit 29.

The AR manual management unit 21 saves and manages information related to a display position of the AR manual in the display unit 35 of the AR device 30 or the like in the AR manual DB 22, in addition to the setting of the AR manual received from the user terminal 10, a text or a model presented as the AR manual, or the auxiliary information. In addition, the AR manual management unit 21 acquires the corresponding AR manual from the AR manual DB 22, and transmits the corresponding AR manual to the AR device 30 according to the designation received from the AR device 30. Further, in a case in which a change of the setting of the existing AR manual is received from the user terminal 10, the AR manual management unit 21 takes out the information of the corresponding AR manual from the AR manual DB 22, and updates the information.

The AR manual DB 22 saves and stores various types of information that are targets for the management by the AR manual management unit 21.

The device information management unit 23 saves and manages the operation logs received from the image forming apparatus 40 in the device information DB 24, together with device identification information for identifying the image forming apparatus 40 that is a transmission source, reception date and time, or the like. In addition, the error report received from the image forming apparatus 40 is saved and managed in the device information DB 24 together with the device identification information or the reception date and time. Further, various types of information to be managed are taken out from the device information DB 24 in response to a request from the correspondence determination unit 27 or the correspondence information creation unit 28.

The device information DB 24 saves and stores various types of information that are targets for the management by the device information management unit 23.

The image data management unit 25 saves and manages the image data received from the AR device 30 in the image data DB 26, together with AR device identification information for identifying the AR device 30 that is a transmission source, the reception date and time, or the like. Also, various types of information to be managed are taken out from the image data DB 26 in response to a request from the correspondence determination unit 27 or the correspondence information creation unit 28.

The image data DB 26 saves and stores various types of information that are targets for the management by the image data management unit 25.

The correspondence determination unit 27 determines a correspondence between the operation received by the image forming apparatus 40 grasped from the operation logs and the operation performed by the user on the image forming apparatus 40 grasped from the image data in the period in which the work is performed according to the AR manual. In other words, the correspondence between the operation logs and the image data in the period in which the work is performed is determined. It should be noted that the correspondence determination unit 27 grasps the operation by the user by, for example, image recognition for the image data.

The correspondence information creation unit 28 creates the correspondence information related to the correspondence between the operation received by the image forming apparatus 40 grasped from the operation logs and the operation performed by the user on the image forming apparatus 40 grasped from the image data, based on a result of the determination in the correspondence determination unit 27.

It should be noted that the details of the determination of the correspondence between the operation logs and the image data by the correspondence determination unit 27 and the correspondence information created by the correspondence information creation unit 28 will be described below.

The communication control unit 29 processes the information transmitted by the communication unit 13 of the user terminal 10, or processes the received information. Specifically, the communication control unit 29 requests various types of information from the user terminal 10, the AR device 30, or the image forming apparatus 40 via the communication unit 13, extracts required information from the information received from the user terminal 10, the AR device 30, or the image forming apparatus 40 via the communication unit 13.

In addition, the communication control unit 29 according to the present exemplary embodiment performs control of transmitting the correspondence information to the user terminal 10 according to the fact that the correspondence information is created by the correspondence information creation unit 28.

### <Deficiency of AR Manual>

Here, in the AR manual, there may be a deficiency, such as an omission or a mistake of the work procedure, and an insufficient description of a precaution. Then, in a case in which the work is performed according to the AR manual in which there is the deficiency, the work on the image forming apparatus 40 may fail due to the deficiency. Therefore, for example, the correction for the AR manual may be performed to resolve the deficiency.

However, in a case in which only a notification that the work has failed is given from the image forming apparatus 40, the user who performs the operation by using the AR manual cannot grasp the deficiency of the AR manual, and it is difficult to correct the AR manual.

In the information processing system 1 (see Fig. 1) according to the present exemplary embodiment, the management server 20 determines the correspondence between the operation received by the image forming apparatus 40 grasped from the operation logs and the operation performed by the user on the image forming apparatus 40 grasped from the image data based on the operation logs acquired from the image forming apparatus 40 and the image data acquired from the AR device 30, and transmits the correspondence information to the user terminal 10. The user can grasp the deficiency of the AR manual and can utilize the information for correcting the AR manual by checking the correspondence information displayed on the user terminal 10.

### <Determination of Correspondence>

Here, the determination of the correspondence between the operation logs and the image data in the correspondence determination unit 27 according to the present exemplary embodiment will be described with reference to Figs. 1, 4 and 5.

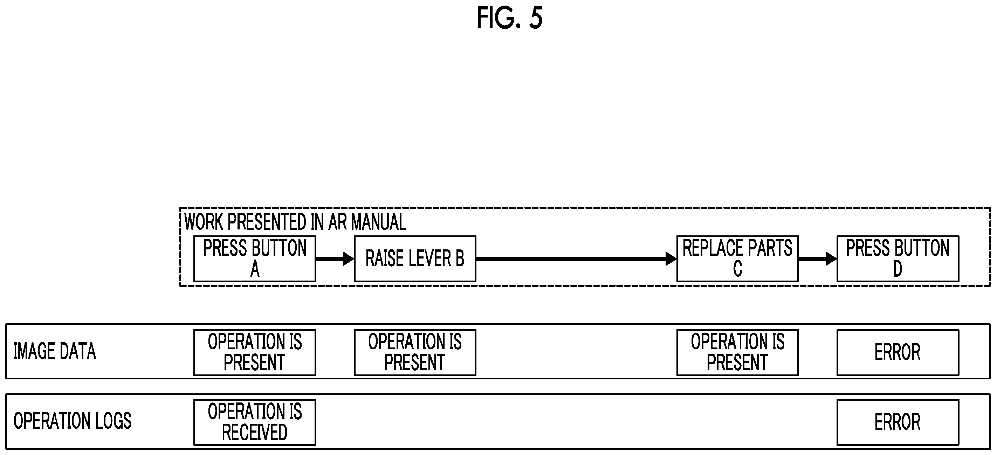

Fig. 5 is a diagram for describing the correspondence between the operation logs and the image data according to the present exemplary embodiment. It should be noted that, in Fig. 5, the work procedure presented in the AR manual, whether or not the operation of the image forming apparatus 40 grasped from the operation logs is received, and the presence or absence of the operation performed by the user on the image forming apparatus 40 grasped from the image data are described.

In the example of Fig. 5, as the work procedure presented in the AR manual, an operation of "press a button A", an operation of "raise a lever B", an operation of "replace parts C", and an operation of "press a button D" are set in this order. Then, in the example of Fig. 5, the error occurs in the image forming apparatus 40 in a case in which the user performs the operation of "press the button D", and the work fails.

The management server 20 starts processing of determining the correspondence between the operation logs and the image data in the correspondence determination unit 27 according to the fact that the error report of the error that occurs in the image forming apparatus 40 by the operation of "press the button D" is received.

As shown in the column of "image data" in Fig. 5, the correspondence determination unit 27 grasps, from the image data, that the error occurs in a case in which the user performs the operation of "press the button D" after executing the operation of "press the button A", the operation of "raise the lever B", and the operation of "replace the parts C". That is, it is grasped that the user executes all the types of work presented in the AR manual.

In addition, as shown in the column of "operation logs" in Fig. 5, the correspondence determination unit 27 grasps, from the operation logs, that the error occurs in a case in which the image forming apparatus 40 receives the operation of "press the button A", and then receives the operation of "press the button D" without receiving the operation of "raise the lever B" and the operation of "replace the parts C".

Then, the correspondence determination unit 27 compares the operation performed by the user on the image forming apparatus 40 grasped from the image data with the operation received by the image forming apparatus 40 grasped from the operation logs, and determines the correspondence between both operations. More specifically, the correspondence determination unit 27 grasps the point that, although the user performs the operation of "raise the lever B", the image forming apparatus 40 does not receive the operation of "raise the lever B", and the point that, although the user performs the operation of "replace the parts C", the image forming apparatus 40 does not receive the operation of "replace the parts C", and makes a determination as a non-correspondence portion in which the operation performed by the user and the operation received by the image forming apparatus 40 do not correspond to each other.

In addition, the correspondence determination unit 27 according to the present exemplary embodiment determines a portion in which the operation performed by the user, which is an operation performed in association with the selection of the operation button 355, and the operation received by the image forming apparatus 40 do not correspond to each other, as the non-correspondence portion.

From the result of the determination by the correspondence determination unit 27, the correspondence information creation unit 28 creates the correspondence information indicating that the operation performed by the user and the operation received by the image forming apparatus 40 do not correspond to each other. More specifically, for example, the correspondence information creation unit 28 creates the correspondence information including the fact that, although the user performs the operation of "raise the lever B", the image forming apparatus 40 does not receive the operation of "raise the lever B". Also, for example, the correspondence information creation unit 28 creates the correspondence information including the fact that, although the user performs the operation of "replace the parts C", the image forming apparatus 40 does not receive the operation of "replace the parts C". The created correspondence information is transmitted to the user terminal 10, is displayed on the display unit 15, and is checked by the user. As a result, the user can grasp that there is the deficiency in a portion corresponding to the process of the operation of "raise the lever B" or the process of the operation of "replace the parts C" in the AR manual.

### <Correspondence Information>

Next, the correspondence information created by the correspondence information creation unit 28 and displayed on the display unit 15 of the user terminal 10 will be described in detail with reference to Figs. 1 and 4 to 6.

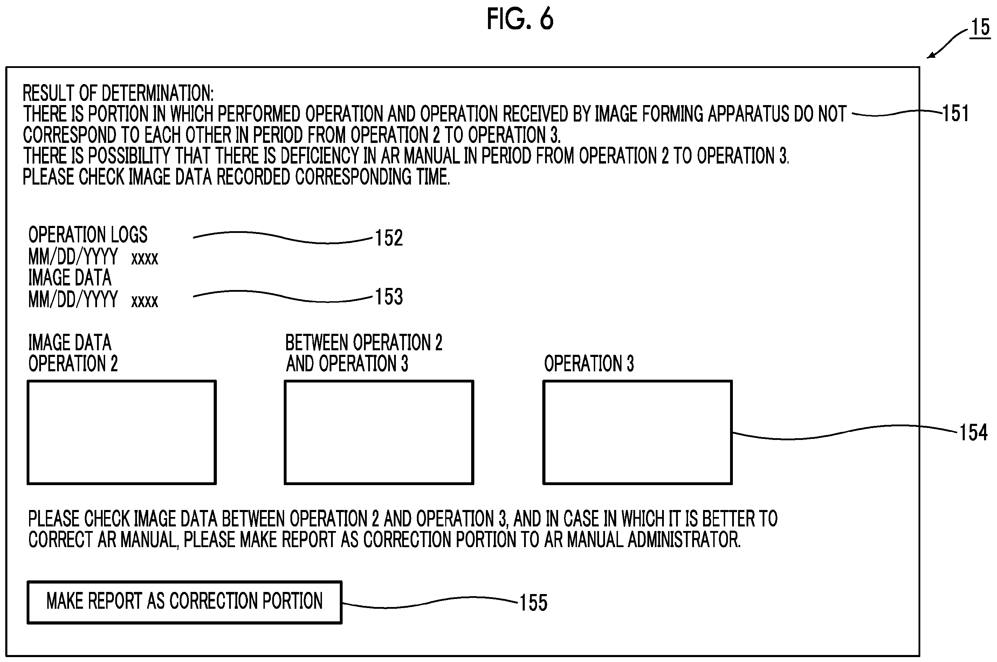

Fig. 6 is a diagram for describing an example of display of the correspondence information.

It should be noted that, in the example of Fig. 6, similarly to the example shown in Fig. 5, for the operation of "raise the lever B" and the operation of "replace the parts C", it is determined that the operation performed by the user or the operation received by the image forming apparatus 40 do not correspond to each other, and the correspondence information corresponding to the result of the determination is created.

In the example of Fig. 6, as the created correspondence information, for the operation of "raise the lever B" or the operation of "replace the parts C", a text 151 indicating that the operation performed by the user and the operation received by the image forming apparatus 40 do not correspond to each other is displayed on the display unit 15. By checking the text 151, the user can grasp that there is the deficiency in a portion corresponding to the process of the operation of "raise the lever B" or the process of the operation of "replace the parts C" in the AR manual. It should be noted that, in a case in which the operation performed in association with the selection of the operation button 355 is specified as the non-correspondence portion, for example, the information indicating that the operation button 355 is selected may be included in the correspondence information displayed on the display unit 15.

In addition, on the display unit 15, as indicated by reference numeral 154, the image data in a case in which the user performs the operation of "raise the lever B" ("operation 2" in Fig. 6), the image data in a case in which the user performs the operation of "replace the parts C" ("operation 3" in Fig. 6), and the image data corresponding to a period between the operation of "raise the lever B" and the operation of "replace the parts C" are displayed. As described above, in a case in which the non-correspondence portion is present between a first operation and a second operation following the first operation, the user can check an actual operation in the portion corresponding to the deficiency of the AR manual and can utilize the actual operation for the correction of the AR manual by displaying the image data corresponding to a period from the first operation and the second operation.

In addition, information 152 for referring to the operation logs used for the determination or information 153 for referring to the image data are displayed on the display unit 15. As the information 152 and the information 153, for example, the date and time at which the management server 20 acquires the operation logs or the image data is displayed, and it is possible to check the corresponding operation logs or image data by accessing the management server 20 and designating the corresponding date and time. It should be noted that, instead of the information 152 and the information 153, a link or the like having a saving location of the corresponding operation logs or image data as a link destination may be displayed.

By the way, a predetermined authority may be requested for setting the AR manual, and the user himself/herself who has checked the correspondence information on the user terminal 10 may not be able to correct the AR manual. Therefore, in the example of Fig. 6, a report button 155 for reporting a correction portion of the AR manual may be provided to an authorized person having the predetermined authority. In a case in which the report button 155 is pressed, for example, in addition to the created correspondence information, the information for referring to the operation logs or the image data used for the determination, the image data displayed on the display unit 15 or the like is transmitted to the authorized person as the report of the correction portion.

Although the exemplary embodiment of the present invention has been described above, the technical scope of the present invention is not limited to the scope described in the exemplary embodiment described above. It is obvious that combinations of two or more of the exemplary embodiments described above and various modifications or improvements to the exemplary embodiments described above are also included in the technical scope of the present description.

In the exemplary embodiment described above, the example has been described in which the correspondence determination unit 27 and the correspondence information creation unit 28 specify the non-correspondence portion in one work, create the correspondence information, and display the correspondence information on the display unit 15. The correspondence determination unit 27 and the correspondence information creation unit 28 may further specify the non-correspondence portions in two or more times of work, and create the correspondence information from a result of comparing the non-correspondence portions in the respective types of work. Specifically, the correspondence determination unit 27 and the correspondence information creation unit 28 may compare a non-correspondence portion of first work that has failed with a non-correspondence portion of second work that has been succeeded, which are work according to the same AR manual, and create correspondence information including information indicating a difference between the non-correspondence portions. For example, in a case in which an operation included in the non-correspondence portion of the second work is not included in the non-correspondence portion of the first work, there is a high possibility that the second work has been succeeded by performing this operation. Therefore, for example, the correspondence information creation unit 28 may include, in the correspondence information, information indicating the operation that is included in the non-correspondence portion of the second work, but is not included in the non-correspondence portion of the first work. In addition, for example, the information suggesting this operation as an operation that should be added to the AR manual may be included. By displaying such correspondence information on the display unit 15, the user can easily grasp an operation to be added as the work procedure to the AR manual.

### <Processor and Program>

The processing performed by the information processing system in each exemplary embodiment is, for example, prepared as a program, such as application software. The program executed by the CPU 11a (see Fig. 3) as an example of the processor in each exemplary embodiment can be provided in a state of being stored in a computer-readable recording medium, such as a magnetic recording medium (magnetic tape, magnetic disk, or the like), an optical recording medium (optical disk or the like), an optical magnetic recording medium, or a semiconductor memory. In addition, the program executed by the CPU 11a may be provided by using a communication unit, such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims

### Brief Description of the Reference Symbols

1: information processing system
10: user terminal
11a: CPU
15: display unit
20: management server
30: AR device

## Claims

1. An information processing system (1) comprising:
one or a plurality of processors configured to:
acquire, for work performed by a user according to an Augmented Reality, AR, manual indicating a work procedure for a target device, a record of an operation received by the target device in a period in which the work is performed;
acquire image data in which a state of an operation performed by the user on the target device is imaged in the period in which the work is performed; and
display correspondence information related to a correspondence between the operation received by the target device in the record and the operation performed by the user on the target device in the image data on a display unit.

2. The information processing system according to claim 1, wherein the one or plurality of processors are configured to:
display, as the correspondence information, information indicating a non-correspondence portion in which the operation received by the target device in the record and the operation performed by the user on the target device in the image data do not correspond to each other on the display unit.

3. The information processing system according to claim 2, wherein the one or plurality of processors are configured to:
in a case in which predetermined input by the user is performed on an input device in the period in which the work is performed, specify an operation performed by the user on the target device in association with the predetermined input as the non-correspondence portion and display the correspondence information on the display unit.

4. The information processing system according to claim 3, wherein the one or plurality of processors are configured to:
display a suggestion to add the operation performed by the user on the target device in association with the predetermined input to the AR manual on the display unit.

5. The information processing system according to any one of claims 2 to 4, wherein the one or plurality of processors are configured to:
in a case in which the non-correspondence portion is present between a first operation included in the work procedure indicated by the AR manual and a second operation following the first operation, display a suggestion to perform correction of the work procedure between the first operation and the second operation in the AR manual on the display unit.

6. The information processing system according to any one of claims 2 to 4, wherein the one or plurality of processors are configured to:
in a case in which the non-correspondence portion is present between a first operation included in the work procedure indicated by the AR manual and a second operation following the first operation, display image data corresponding to a period from the first operation to the second operation in the image data on the display unit.

7. A program causing a computer to realize:
a function of acquiring, for work performed by a user according to an Augmented Reality, AR, manual indicating a work procedure for a target device, a record of an operation received by the target device in a period in which the work is performed;
a function of acquiring image data in which a state of an operation performed by the user on the target device is imaged in the period in which the work is performed; and
a function of displaying correspondence information related to a correspondence between the operation received by the target device in the record and the operation performed by the user on the target device in the image data on a display unit.

8. An information processing method comprising:
acquiring, for work performed by a user according to an Augmented Reality, AR, manual indicating a work procedure for a target device, a record of an operation received by the target device in a period in which the work is performed;
acquiring image data in which a state of an operation performed by the user on the target device is imaged in the period in which the work is performed; and
displaying correspondence information related to a correspondence between the operation received by the target device in the record and the operation performed by the user on the target device in the image data on a display unit.

## Patentansprüche

1. Informationsverarbeitungssystem (1), umfassend:
einen oder mehrere Prozessoren, die so konfiguriert sind, dass sie:
für Arbeit, die von einem Benutzer gemäß einem Handbuch zu erweiterter Realität (Augmented Reality, AR), das einen Arbeitsablauf für eine Zielvorrichtung angibt, durchgeführt wird, eine Aufzeichnung einer Bedienung, die von der Zielvorrichtung in einem Zeitraum, in dem die Arbeit durchgeführt wird, empfangen wird, erfassen;
Bilddaten erfassen, in denen ein Zustand einer Bedienung, die seitens des Benutzers an der Zielvorrichtung durchgeführt wird, in dem Zeitraum, in dem die Arbeit durchgeführt wird, abgebildet ist; und
Korrespondenzinformationen, die sich auf eine Korrespondenz zwischen der Bedienung, die von der Zielvorrichtung empfangen wird, in der Aufzeichnung und der Bedienung, die seitens des Benutzers an der Zielvorrichtung durchgeführt wird, in den Bilddaten beziehen, auf einer Anzeigeeinheit anzeigen.

2. Informationsverarbeitungssystem nach Anspruch **1,** wobei der eine oder die mehreren Prozessoren so konfiguriert sind, dass sie:
als die Korrespondenzinformationen, Informationen, die einen Nicht-Korrespondenzabschnitt, in dem die von der Zielvorrichtung empfangene Bedienung in der Aufzeichnung und die seitens des Benutzers an der Zielvorrichtung durchgeführte Bedienung in den Bilddaten einander nicht entsprechen, angeben, auf der Anzeigeeinheit anzeigen.

3. Informationsverarbeitungssystem nach Anspruch 2, wobei der eine oder die mehreren Prozessoren so konfiguriert sind, dass sie:
in einem Fall, in dem vorbestimmte Eingabe durch den Benutzer an einer Eingabevorrichtung in dem Zeitraum, in dem die Arbeit durchgeführt wird, durchgeführt wird, eine Bedienung, die seitens des Benutzers an der Zielvorrichtung durchgeführt wird, in Verbindung mit der vorbestimmten Eingabe als den Nicht-Korrespondenzabschnitt spezifiziert und die Korrespondenzinformationen auf der Anzeigeeinheit anzeigen.

4. Informationsverarbeitungssystem nach Anspruch 3, wobei der eine oder die mehreren Prozessoren so konfiguriert sind, dass sie:
einen Vorschlag, die seitens des Benutzers an der Zielvorrichtung durchgeführte Bedienung hinzuzufügen, in Verbindung mit der vorbestimmten Eingabe in das Handbuch zu erweiterter Realität auf der Anzeigeeinheit anzeigen.

5. Informationsverarbeitungssystem nach einem der Ansprüche 2 bis 4, wobei der eine oder die mehreren Prozessoren so konfiguriert sind, dass sie:
in einem Fall, in dem der Nicht-Korrespondenzabschnitt zwischen einer ersten Bedienung, die in dem Arbeitsablauf, der durch das Handbuch zu erweiterter Realität angegeben ist, enthalten ist, und einer zweiten Bedienung, die der ersten Bedienung folgt, vorhanden ist, einen Vorschlag, Korrektur des Arbeitsablaufs zwischen der ersten Bedienung und der zweiten Bedienung in dem Handbuch zu erweiterter Realität durchzuführen, auf der Anzeigeeinheit anzeigen.

6. Informationsverarbeitungssystem nach einem der Ansprüche 2 bis 4, wobei der eine oder die mehreren Prozessoren so konfiguriert sind, dass sie:
in einem Fall, in dem der Nicht-Korrespondenzabschnitt zwischen einer ersten Bedienung, die in dem Arbeitsablauf, der durch das Handbuch zu erweiterter Realität angegeben ist, enthalten ist, und einer zweiten Bedienung, die der ersten Bedienung folgt, vorhanden ist, Bilddaten, die einem Zeitraum ab der ersten Bedienung und bis zu der zweiten Bedienung entsprechen, in den Bilddaten auf der Anzeigeeinheit anzeigen.

7. Programm, das einen Computer veranlasst zu realisieren:
eine Funktion des Erfassens, für Arbeit, die von einem Benutzer gemäß einem Handbuch zu erweiterter Realität (Augmented Reality, AR), das einen Arbeitsablauf für eine Zielvorrichtung angibt, durchgeführt wird, einer Aufzeichnung einer Bedienung, die von der Zielvorrichtung in einem Zeitraum, in dem die Arbeit durchgeführt wird, empfangen wird;
eine Funktion des Erfassens von Bilddaten, in denen ein Zustand einer Bedienung, die seitens des Benutzers an der Zielvorrichtung durchgeführt wird, in dem Zeitraum, in dem die Arbeit durchgeführt wird, abgebildet ist; und
eine Funktion des Anzeigens von Korrespondenzinformationen, die sich auf eine Korrespondenz zwischen der Bedienung, die von der Zielvorrichtung empfangen wird, in der Aufzeichnung und der Bedienung, die seitens des Benutzers an der Zielvorrichtung durchgeführt wird, in den Bilddaten beziehen, auf einer Anzeigeeinheit.

8. Informationsverarbeitungsverfahren, umfassend:
Erfassen, für Arbeit, die von einem Benutzer gemäß einem Handbuch zu erweiterter Realität (Augmented Reality, AR), das einen Arbeitsablauf für eine Zielvorrichtung angibt, durchgeführt wird, einer Aufzeichnung einer Bedienung, die von der Zielvorrichtung in einem Zeitraum, in dem die Arbeit durchgeführt wird, empfangen wird;
Erfassen von Bilddaten, in denen ein Zustand einer Bedienung, die seitens des Benutzers an der Zielvorrichtung durchgeführt wird, in dem Zeitraum, in dem die Arbeit durchgeführt wird, abgebildet ist; und
Anzeigen von Korrespondenzinformationen, die sich auf eine Korrespondenz zwischen der Bedienung, die von der Zielvorrichtung empfangen wird, in der Aufzeichnung und der Bedienung, die seitens des Benutzers an der Zielvorrichtung durchgeführt wird, in den Bilddaten beziehen, auf einer Anzeigeeinheit.

## Revendications

1. Système de traitement d'informations (1) comprenant :
un ou une pluralité de processeurs configurés pour :
acquérir, pour un travail effectué par un utilisateur en fonction d'un manuel de réalité augmentée (Augmented Reality, AR) indiquant une procédure de travail pour un dispositif cible, un enregistrement d'une opération reçue par le dispositif cible pendant une période où le travail est effectué ;
acquérir des données d'images dans lesquelles un état d'une opération effectuée par l'utilisateur sur le dispositif cible est imagé pendant la période où le travail est effectué ; et
afficher des informations de correspondance liées à une correspondance entre l'opération reçue par le dispositif cible dans l'enregistrement et l'opération effectuée par l'utilisateur sur le dispositif cible dans les données d'images sur une unité d'affichage.

2. Système de traitement d'informations selon la revendication 1, dans lequel l'un ou la pluralité de processeurs sont configurés pour :
afficher, comme les informations de correspondance, des informations indiquant une partie de non-correspondance dans laquelle l'opération reçue par le dispositif cible dans l'enregistrement et l'opération effectuée par l'utilisateur sur le dispositif cible dans les données d'images ne correspondent pas l'une à l'autre, sur l'unité d'affichage.

3. Système de traitement d'informations selon la revendication 2, dans lequel l'un ou la pluralité de processeurs sont configurés pour :
dans un cas où une entrée prédéterminée par l'utilisateur est effectuée sur un dispositif d'entrée pendant la période où le travail est effectué, spécifier une opération effectuée par l'utilisateur sur le dispositif cible en association avec l'entrée prédéterminée comme la partie de non-correspondance et afficher les informations de correspondance sur l'unité d'affichage.

4. Système de traitement d'informations selon la revendication 3, dans lequel l'un ou la pluralité de processeurs sont configurés pour :
afficher une suggestion d'ajouter l'opération effectuée par l'utilisateur sur le dispositif cible en association avec l'entrée prédéterminée au manuel de réalité augmentée sur l'unité d'affichage.

5. Système de traitement d'informations selon l'une quelconque des revendications 2 à 4, dans lequel l'un ou la pluralité de processeurs sont configurés pour :
dans un cas où la partie de non-concordance est présente entre une première opération incluse dans la procédure de travail indiquée par le manuel de réalité augmentée, et
une deuxième opération suivant la première opération, afficher une suggestion d'effectuer une correction de la procédure de travail entre la première opération et la deuxième opération dans le manuel de réalité augmentée sur l'unité d'affichage.

6. Système de traitement d'informations selon l'une quelconque des revendications 2 à 4, dans lequel l'un ou la pluralité de processeurs sont configurés pour :
dans un cas où la partie de non-concordance est présente entre une première opération incluse dans la procédure de travail indiquée par le manuel de réalité augmentée, et
une deuxième opération suivant la première opération, afficher des données d'images correspondant à une période à partir de la première opération jusqu'à la deuxième opération dans les données d'images sur l'unité d'affichage.

7. Programme amenant un ordinateur à réaliser :
une fonction d'acquisition, pour un travail effectué par un utilisateur en fonction d'un manuel de réalité augmentée (Augmented Reality, AR) indiquant une procédure de travail pour un dispositif cible, d'un enregistrement d'une opération reçue par le dispositif cible pendant une période où le travail est effectué ;
une fonction d'acquisition de données d'images dans lesquelles un état d'une opération effectuée par l'utilisateur sur le dispositif cible est imagé pendant la période où le travail est effectué ; et
une fonction d'affichage d'informations de correspondance liées à une correspondance entre l'opération reçue par le dispositif cible dans l'enregistrement et l'opération effectuée par l'utilisateur sur le dispositif cible dans les données d'images sur une unité d'affichage.

8. Procédé de traitement d'informations comprenant :
acquérir, pour un travail effectué par un utilisateur en fonction d'un manuel de réalité augmentée (Augmented Reality, AR) indiquant une procédure de travail pour un dispositif cible, un enregistrement d'une opération reçue par le dispositif cible pendant une période où le travail est effectué ;
acquérir des données d'images dans lesquelles un état d'une opération effectuée par l'utilisateur sur le dispositif cible est imagé pendant la période où le travail est effectué ; et
afficher des informations de correspondance liées à une correspondance entre l'opération reçue par le dispositif cible dans l'enregistrement et l'opération effectuée par l'utilisateur sur le dispositif cible dans les données d'images sur une unité d'affichage.
